# EUROPEAN PATENT APPLICATION

(11) **EP 2 474 818 A1**
(43) Date of publication of application: **11.07.2012**
(21) Application number: 10813696.1
(22) Date of filing: 31.08.2010
(51) Int. Cl.: G01J 3/18

(54) **SPECTRAL MODULE**

(30) Priority: 03.09.2009 JP 2009203744
(71) Applicant: Hamamatsu Photonics K.K., Hamamatsu-shi, Shizuoka 435-8558 (JP)
(72) Inventor: SHIBAYAMA Katsumi, Hamamatsu-shi Shizuoka 435-8558 (JP); YOKINO Takafumi, Hamamatsu-shi Shizuoka 435-8558 (JP)
(74) Representative: HOFFMANN EITLE
(86) International application number: PCT/JP2010/064806
(87) International publication number: WO 2011/027747

(57) **Abstract**

In a spectroscopic module, a flange 7 is formed integrally with a diffraction layer 6 along a periphery 6a thereof so as to become thicker than the diffraction layer 6, while a part of a curved surface 3a of a lens unit 3 in contact with the flange 7 is a rough surface. This allows the flange 7 having enhanced adherence to the curved surface 3 a to surround the diffraction layer 6. Therefore, even when thinned, the diffraction layer 6 can be prevented from peeling off from the convex curved surface 3a of the lens unit 3. Further, in this spectroscopic module, a rear face 7a of the flange 7a opposing the curved surface 3a of the lens unit 3 is a flat surface. Consequently, light entering the flange 7, if any, reaches the rear face 7a that is a flat surface of the flange 7. Hence, light directly forming an image as stray light on a photodetection unit of a photodetector can be reduced.

## Description

### Technical Field

The present invention relates to a spectroscopic module which disperses and detects light.

### Background Art

Known as a conventional spectroscopic module is one comprising a main unit for transmitting therethrough light incident thereon from one side; a spectroscopic unit, on the other side of the main unit, for dispersing the light incident on the main unit and reflecting the light to the one side of the main unit; and a photodetector, on the one side of the main unit, for detecting the light dispersed by the spectroscopic unit (see, for example, Patent Literatures 1 and 2).

### Citation List

### Patent Literature

Patent Literature 1: Japanese Patent Application Laid-Open No. 4-294223
Patent Literature 2: International Publication 2008/149939 pamphlet

### Summary of Invention

### Technical Problem

Spectroscopic modules such as the one mentioned above have been desired to improve their detection accuracy by reducing stray light occurring within the main unit and so forth, while making the main unit finer in order to attain smaller sizes.

In view of such circumstances, it is an object of the present invention to provide a highly reliable spectroscopic module.

### Solution to Problem

For achieving the above-mentioned object, the spectroscopic module in accordance with the present invention comprises a main unit for transmitting therethrough light incident thereon from one side; a spectroscopic unit, disposed on a convex curved surface formed on the other side of the main unit, for dispersing the light incident on the main unit and reflecting the light to the one side of the main unit; and a photodetector, disposed on the one side of the main unit, for detecting the light dispersed by the spectroscopic unit; wherein the spectroscopic unit has a diffraction layer formed along the curved surface, a flange integrally formed with the diffraction layer along a periphery thereof so as to become thicker than the diffraction layer, and a reflection layer formed on the other side of the diffraction layer; wherein at least a part of the curved surface in contact with the flange is a rough surface adapted to scatter light; and wherein a surface of the flange opposing the curved surface is a flat surface.

In this spectroscopic module, a flange is formed integrally with a diffraction layer along a periphery thereof so as to become thicker than the diffraction layer, while a part of the curved surface which is in contact with the flange is a rough surface. As a consequence, the flange highly adherent to the curved surface surrounds the diffraction layer, whereby the diffraction layer can be prevented from peeling off from the convex curved surface of the main unit even when made thinner. Further, in this spectroscopic module, the surface of the flange opposing the curved surface is a flat surface. Therefore, light entering the flange without being reflected by irregularities of the rough surface which are filled with the flange, if any, reaches the flat surface of the flange, whereby the light directly forming an image as stray light on the photodetector can be reduced. This can improve the reliability of the spectroscopic module.

Preferably, in the spectroscopic module in accordance with the present invention, a part of the curved surface opposing a diffraction grating pattern of the diffraction layer while in contact with the diffraction layer is a surface smoother than the part of the curved surface in contact with the flange. This can inhibit voids and the like from occurring between the convex curved surface of the main unit and the diffraction grating pattern of the diffraction layer, whereby the light to be measured coming in and out of the diffraction grating pattern can be prevented from being scattered and so forth. Hence, the spectroscopic module can improve its detection accuracy.

Preferably, in the spectroscopic module in accordance with the present invention, a surface of the flange opposing the curved surface is a rough surface adapted to scatter light. In this structure, the light entering the flange is scattered by the flat surface (partly or wholly roughed flat surface) of the flange, whereby the light directly forming an image as stray light on the photodetector can be reduced more reliably.

### Advantageous Effects of Invention

The present invention can provide a highly reliable spectroscopic module.

### Brief Description of Drawings

**[****Fig. 1****]** is a plan view of an embodiment of the spectroscopic module in accordance with the present invention;
**[****Fig. 2****]** is a sectional view taken along the line II-II of Fig. 1;
**[****Fig. 3****]** is a perspective view of a lens unit in the spectroscopic module of Fig. 1;
**[****Fig. 4****]** is a sectional view of a spectroscopic unit in the spectroscopic module of Fig. 1;
**[****Fig. 5****]** is a bottom view of the spectroscopic unit in the spectroscopic module of Fig. 1; and
**[****Fig. 6****]** is a sectional view of the spectroscopic module in accordance with another embodiment of the spectroscopic module in accordance with the present invention.

### Description of Embodiments

In the following, preferred embodiments of the present invention will be explained in detail with reference to the drawings. In the drawings, the same or equivalent parts will be referred to with the same signs while omitting their overlapping descriptions.

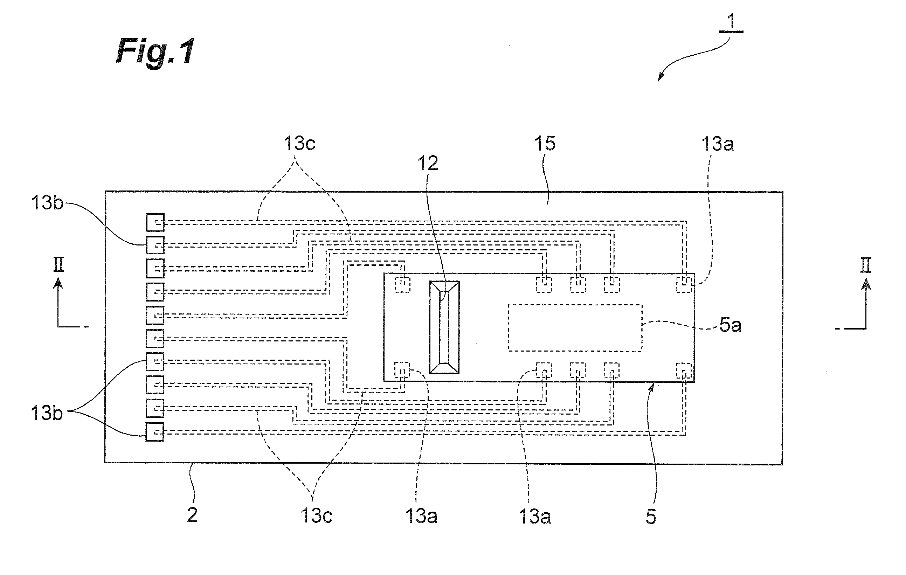

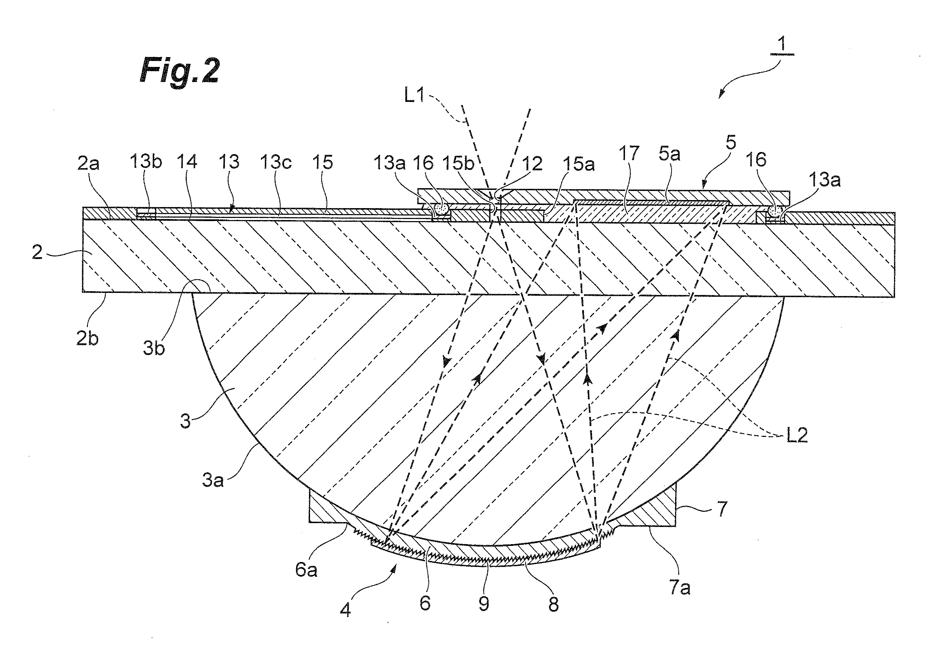

As illustrated in Figs. 1 and 2, a spectroscopic module 1 comprises a substrate (main unit) 2 and a lens unit (main unit) 3 which transmit therethrough light L1, a spectroscopic unit 4 disposed on a curved surface 3 a of the lens unit 3, and a photodetector 5 placed on a front face 2a of the substrate. The spectroscopic module 1 disperses the light L1 into a plurality of lights L2 by the spectroscopic unit 4 and detects the lights L2 by the photodetector 5, thereby measuring the wavelength distribution of the light L1, the intensity of a specific wavelength component thereof, and the like.

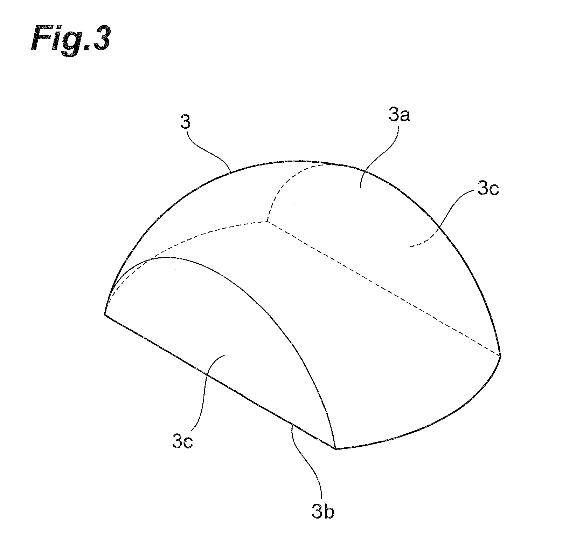

The substrate 2 is formed like an oblong sheet from light-transmitting glass such as BK7, Pyrex (registered trademark), and silica; light-transmitting molded glass; light-transmitting plastic; or the like. The lens unit 3 is formed like a hemisphere from the same material as with the substrate 2, a light-transmitting resin, a light-transmitting inorganic/organic hybrid material, light-transmitting low-melting glass for molding a replica, or the like. More specifically, as illustrated in Fig. 3, the lens unit 3 has such a form that a hemispherical lens having the curved surface 3a and a front face 3b is cut off by two planes substantially perpendicular to the front face 3b and substantially parallel to each other, so as to yield side faces 3c. The light components L2 spectrally resolved by the spectroscopic unit 4 disposed on the curved surface 3a form images on a photodetection unit 5a of the photodetector 5.

As illustrated in Figs. 1 and 2, the rear face 2b of the substrate 2 and the front face 3b of the lens unit 3 are joined to each other by an optical resin or direct bonding in a state where the longitudinal direction of the substrate 2 is substantially parallel to the side faces 3c of the lens unit 3. As a consequence, the substrate 2 and lens unit 3 transmit therethrough the light L1 incident thereon from the front side (one side of the main unit). The spectroscopic unit 4 is disposed on the convex curved surface 3a formed on the rear side of the substrate 2 and lens unit 3 (the other side of the main unit), while the photodetector 5 is placed on the front side of the substrate 2 and lens unit 3.

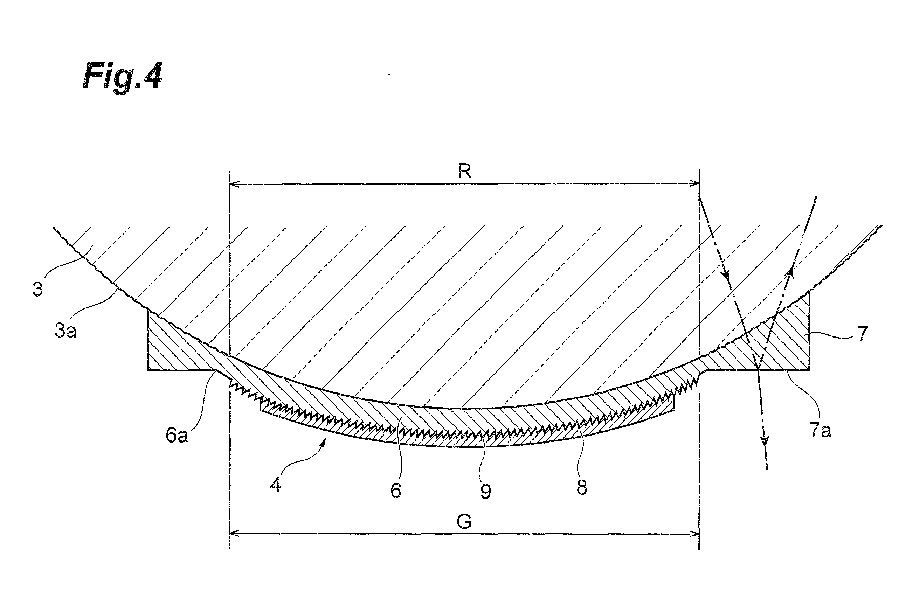

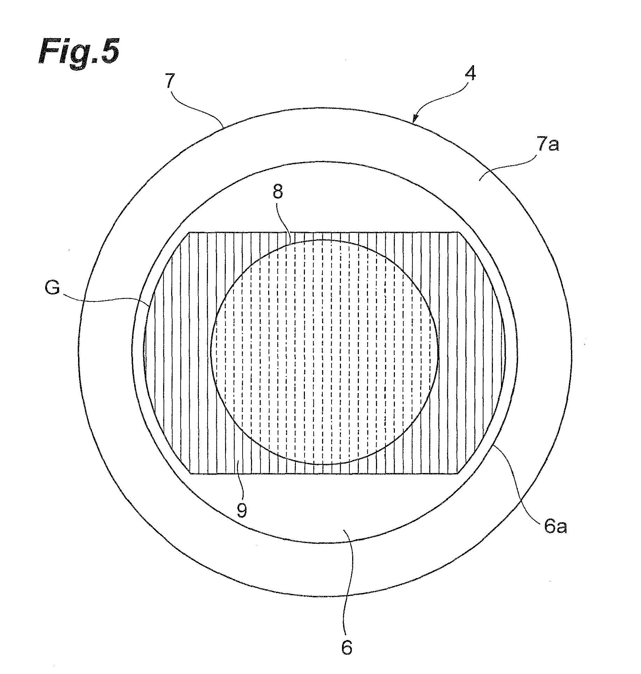

The spectroscopic unit 4 is constructed as a reflection grating, which disperses the light L1 entering the substrate 2 and lens unit 3 and reflects the dispersed lights L2 to the front side. More specifically, as illustrated in Figs. 4 and 5, the spectroscopic unit 4 has a diffraction layer 6 formed along the curved surface 3a, a flange 7 integrally formed with the diffraction layer 6 along a periphery 6a thereof so as to become thicker than the diffraction layer 6, and a reflection layer 8 formed on the front face on the outer side (rear side) of the diffraction layer 6.

The diffraction layer 6 is formed with a diffraction grating pattern 9. The diffraction grating pattern 9, examples of which include blazed gratings with a saw-toothed cross section, binary gratings with a rectangular cross section, and holographic gratings with a sinusoidal cross section, is constructed by arranging a plurality of grooves in parallel along the longitudinal direction of the substrate 2.

When seen from the rear side, the diffraction layer 6 and flange 7 are formed like a circle and a circular ring, respectively. The region G formed with the diffraction grating pattern 9 has a form elongated along the longitudinal direction of the substrate 2 when seen from the rear side. The reflection layer 8, which is formed like a circle when seen from the rear side, is included in the region G formed with the diffraction grating pattern 9. A protective layer such as a passivation film may be formed on the outer (rear) surface of the diffraction layer 6 such as to contain and cover the reflection layer 8 when seen from the rear side.

For reference, the following is an example of sizes of the parts. The diffraction layer 6 has an outer diameter of 2 mm to 10 mm and a thickness of 1 µm to 20 µm, while the flange 7 has a width of 0.1 mm to 1 mm and a thickness of 10 µm to 500 µm. The reflection layer 8 has an outer diameter of 1 mm to 7 mm and a thickness of 10 nm to 2000 nm. The region G formed with the diffraction grating pattern 9 has a length of 1.5 mm to 8 mm on each side.

As illustrated in Figs. 1 and 2, the photodetector 5 has the photodetection unit 5a for detecting the lights L2 spectrally resolved by the spectroscopic unit 4. The photodetection unit 5a is constructed by long photodiodes arranged one-dimensionally in a direction substantially perpendicular to the longitudinal direction thereof. The photodetector 5 is placed such that the one-dimensional arrangement direction of photodiodes substantially coincides with the longitudinal direction of the substrate 2, while the photodetection unit 5a faces the front face 2a of the substrate 2. The photodetector 5 may be a C-MOS image sensor, a CCD image sensor, or the like without being restricted to the photodiode array.

The photodetector 5 is provided with a light-transmitting aperture 12 for allowing the light L1 advancing to the spectroscopic unit 4 to enter the substrate 2 and lens unit 3. The light-transmitting aperture 12 is disposed in parallel with the photodetection unit 5a along the one-dimensional arrangement direction of photodiodes. The light-transmitting aperture 12, which is a slit extending in a direction substantially perpendicular to the longitudinal direction of the substrate 2 and substantially parallel to the front face 2a of the substrate 2, is formed by etching or the like while being aligned highly accurately with the photodetection unit 5a.

A wiring pattern 13 constituted by a monolayer film of Al, Au, or the like or a multilayer film of Cr-Pt-Au, Ti-Pt-Au, Ti-Ni-Au, Cr-Au, or the like is formed on the front face 2a of the substrate 2. The wiring pattern 13 has a plurality of pad units 13a, 13b and a plurality of connection units 13c for connecting their corresponding pad units 13a, 13b to each other. An antireflection layer 14 constituted by a monolayer of CrO or the like or a multilayer film of Cr-CrO or the like is formed on the front face 2a side of the substrate 2 with respect to the wiring pattern 13.

A light-absorbing layer 15 constituted by a monolayer film such as CrO, a multilayer film containing CrO or the like, a black resist, or the like is further formed on the front face 2a of the substrate 2. The light-absorbing layer 15 covers the connection units 13c of the wiring pattern 13 while exposing the pad units 13a, 13b thereof. The light-absorbing layer 15 is provided with a slit 15b for transmitting therethrough the light L 1 advancing to the spectroscopic unit 4 and an opening 15a for transmitting therethrough the lights L2 proceeding to the photodetection unit 5a of the photodetector 5. The slit 15b opposes the light-transmitting aperture 12 of the photodetector 5, while the opening 15a opposes the photodetection unit 5a.

Outer terminals of the photodetector 5 are electrically connected by facedown bonding through bumps 16 to the pad units 13a exposed on the light-absorbing layer 15. An underfill material 17 which transmits therethrough at least the lights L2 is provided on the substrate 2 side of the photodetector 5 (between the photodetector 5 and the substrate 2 or light-absorbing layer 15 here). The underfill material 17 fills the whole space between the photodetector 5 and the substrate 2 in the structure illustrated in Fig. 2 but may be provided only about the bumps 16. The pad units 13b exposed on the light-absorbing layer 15 function as outer terminals of the spectroscopic module 1. That is, external leads and the like are electrically connected to the pad units 13b exposed on the light-absorbing layer 15.

The above-mentioned spectroscopic unit 4 and its nearby parts will now be explained in more detail. As illustrated in Figs. 4 and 5, the curved surface 3a of the lens unit 3 is roughed by sandblasting, etching, or the like except for a region R (corresponding to the region G formed with the diffraction grating pattern 9) to be formed with the diffraction layer 6. That is, in the curved surface 3a, the area excluding the region R is a surface rougher (having a greater surface roughness) than the front and rear faces 2a 2b serving as light entrance and exit surfaces of the substrate 2 and the front face 3b acting as a light entrance and exit surface of the lens unit 3. The surface roughness, which is 0.05 to 5 µm, for example, is such that light advancing through the substrate 2 and lens unit 3 is scattered when incident on the rough surface.

As a consequence, the part of the curved surface 3a in contact with the flange 7 is a rough surface adapted to scatter light. On the other hand, the part (i.e., region R) of the curved surface 3a opposing the diffraction grating pattern 9 of the diffraction layer 6 while in contact with the diffraction layer 6 is a surface smoother than the part of the curved surface 3a in contact with the flange 7. That is, the region R of the curved surface 3a is a surface as smooth as the front and rear faces 2a, 2b serving as the light entrance and exit surfaces of the substrate 2 and the front face 3b acting as the light entrance and exit surface of the lens unit 3.

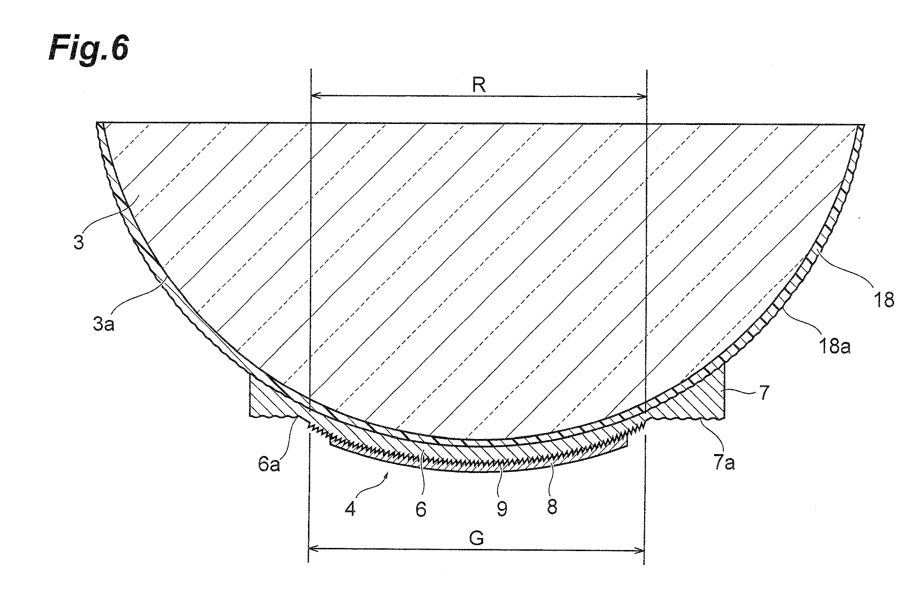

The rear face 7a of the flange 7 opposing the curved surface 3a is a flat surface. Here, the rear face 7a is substantially parallel to the front and rear faces 2a, 2b serving as the light entrance and exit surfaces of the substrate 2 and the front face 3b acting as the light entrance and exit surface of the lens unit 3. Since irregularities of the rough surface of the curved surface 3a are thus filled with the flange 7, the light entering the flange 7 after advancing through the substrate 2 and lens unit 3 without being reflected by the rough surface, if any, reaches the rear face 7a of the flange 7, which is a flat surface, so as to be reflected thereby or transmitted therethrough at a predetermined angle (see the arrows of dash-single-dot lines in Fig. 4). Therefore, the light entering the flange 7 can be prevented from directly forming an image as stray light on the photodetection unit 5a of the photodetector 5. The rear face 7a of the flange 7 may partly or wholly be a rough surface adapted to scatter light as with the area excluding the region R in the curved surface 3a (see Fig. 6). In the partly or wholly roughed surface of the rear face 7a, the average surface of the surface roughness (surface including a surface roughness average line) is a substantially flat surface.

In the spectroscopic module 1, as explained in the foregoing, the flange 7 is integrally formed with the diffraction layer 6 along the periphery 6a thereof so as to become thicker than the diffraction layer 6, while the part of the curved surface 3a of the lens unit 3 in contact with the flange 7 is a rough surface. This allows the flange 7 having enhanced adherence to the curved surface 3a, to which an anchor effect also contributes, to surround the diffraction layer 6. As a consequence, the diffraction layer 6 can be prevented from peeling off from the convex curved surface 3a of the lens unit 3 even when made thinner as the spectroscopic module 1 becomes smaller. In the spectroscopic module 1, the rear face 7a of the flange 7 opposing the curved surface 3a of the lens unit 3 is a flat surface. Therefore, light entering the flange 7 without being reflected by irregularities of the rough surface which are filled with the flange 7, if any, reaches the rear face 7a that is a flat surface of the flange 7. This can reduce the light directly forming an image as stray light on the photodetection unit 5a of the photodetector 5. Hence, the reliability of the spectroscopic module 1 can be improved. The light entering the region free of the spectroscopic unit 4 in the curved surface 3a of the lens unit 3 is also scattered by the rough surface, whereby stray light is suppressed.

In the curved surface 3a of the lens unit 3, the part (i.e., region R) opposing the diffraction grating pattern 9 of the diffraction layer 6 while in contact with the diffraction layer 6 is a surface smoother than the part in contact with the flange 7. This can restrain voids and the like from occurring between the convex curved surface 3a of the lens unit 3 and the diffraction grating pattern 9 of the diffraction layer 6, whereby the lights L1, L2 to be measured coming in and out of the diffraction grating pattern 9 can be prevented from being scattered and so forth. Hence, the spectroscopic module 1 can improve its detection accuracy.

When the rear face 7a of the flange 7 opposing the curved surface 3a of the lens unit 3 is a rough surface adapted to scatter light as with the area excluding the region R in the curved surface 3a, the light entering the flange 7 is scattered by the rear face 7a that is a flat surface of the flange 7, whereby the light directly forming an image as stray light on the photodetection unit 5a of the photodetector 5 can be reduced more reliably.

Providing the spectroscopic unit 4 on the convex curved surface 3a makes it possible to form the diffraction layer 6 very thin, e.g., by a thickness of 1 µm to 20 µm. This can suppress the light absorption in the diffraction layer 6, thereby improving the light utilization efficiency. Forming the diffraction layer 6 very thin can also inhibit the diffraction layer 6 from being deformed (expanded/shrunk and so forth) by heat and moisture, thereby securing stable spectral characteristics and high reliability. On the other hand, providing the spectroscopic unit 4 on the convex curved surface 3a can make the flange 7 thicker than the diffraction layer 6 reliably and easily, thereby preventing the diffraction layer 6 from peeling off from the curved surface 3 a.

A method of manufacturing the above-mentioned spectroscopic module 1 will now be explained.

First, the spectroscopic unit 4 is formed on the lens unit 3. More specifically, the curved surface 3a of the lens unit 3 is roughed by sandblasting, etching, or the like except for the region R (corresponding to the region G formed with the diffraction grating pattern 9) to be formed with the diffraction layer 6. For preparing the lens unit 3, a molded lens having a predetermined region roughed beforehand may also be used.

Next, a photocurable optical resin material for a replica made of an epoxy resin, an acrylic resin, an organic/inorganic hybrid resin, or the like, for example, is applied near the region R of the curved surface 3a of the lens unit 3. Subsequently, a light-transmitting master mold made of silica or the like is pressed against the resin material. The master mold is provided with a concave curved surface having substantially the same curvature as with the curved surface 3a of the lens unit 3, while the concave curved surface is formed with a plurality of grooves corresponding to the diffraction grating pattern 9.

Then, while the master mold is pressed against the resin material, the latter is irradiated with UV rays through the master mold, so as to be cured, whereby the diffraction layer 6 provided with the diffraction grating pattern 9 and the flange 7 are formed integrally with each other. Here, in the part of the curved surface 3a of the lens unit 3 in contact with the flange 7, irregularities of the rough surface of the curved surface 3a are filled with the flange 7.

Subsequently, the master mold is released from the resin material. Preferably, heat curing is performed after releasing the mold, so as to stabilize the resin material. Here, the flange 7 is integrally formed with the diffraction layer 6 along the periphery 6a thereof so as to become thicker than the diffraction layer 6, while the part of the curved surface 3a of the lens unit 3 in contact with the flange 7 is a rough surface, whereby the diffraction layer 6 formed along the convex curved surface 3a of the lens unit 3 can be prevented from being taken away from the curved surface 3a together with the master mold at the time of releasing the mold.

Next, a metal such as Al or Au is vapor-deposited within the region G formed with the diffraction grating pattern 9, so as to form the reflection layer 8 as a film, thereby yielding the spectroscopic unit 4. A protective layer which is a passivation film may further be formed such as to contain and cover the reflection layer 8.

While the spectroscopic unit 4 is formed as in the foregoing, the photodetector 5 is mounted to the substrate 2. More specifically, the antireflection layer 14 and the wiring pattern 13 are formed on the front face 2a of the substrate 2 by patterning, and the light-absorbing layer 15 is further formed on the whole surface and then patterned, so as to expose the pad units 13a, 13b and produce the slit 15b and opening 15a. Subsequently, the photodetector 5 is mounted by facedown bonding to the front face 2a of the substrate 2.

Then, while the spectroscopic unit 4 is aligned highly accurately with the photodetection unit 5a of the photodetector 5, the rear face 2b of the substrate 2 mounted with the photodetector 5 and the front face 3b of the lens unit 3 formed with the spectroscopic unit 4 are joined to each other by an optical resin or direct bonding, so as to complete the spectroscopic module 1.

The present invention is not limited to the above-mentioned embodiment.

For example, as illustrated in Fig. 6, the curved surface 3a of the lens unit 3 may be covered with an optical resin coating 18, while at least a part of an outer curved surface 18a of the optical resin coating 18 in contact with the flange may be a rough surface adapted to scatter light. In the above-mentioned embodiment, even when the region to be formed with the diffraction layer 6 in the curved surface 3a of the lens unit 3 is roughed or when the region to be formed with the diffraction layer 6 in the curved surface 18a of the optical resin coating 18 is roughed in the structure illustrated in Fig. 6, filling the irregularities of the rough surface with the diffraction layer 6 can prevent the lights L1, L2 to be measured from being hindered from progressing.

The convex curved surface provided with the spectroscopic unit may be a curved surface other than spherical surfaces. The substrate 2 and the lens unit 3 may be formed integrally with each other. A photodetector having no light-transmitting aperture may be employed, such that the light L1 enters from the slit 15b of the light-absorbing layer 15, for example.

### Industrial Applicability

The present invention can provide a highly reliable spectroscopic module.

### Reference Signs List

1... spectroscopic module; 2... substrate (main unit); 3...lens unit (main unit); 3 a... curved surface; 4... spectroscopic unit; 5...photodetector; 6... diffraction layer; 6a...periphery; 7... flange; 7a...rear face; 8...reflection layer; 9...diffraction grating pattern

## Claims

1. A spectroscopic module comprising:
a main unit for transmitting therethrough light incident thereon from one side;
a spectroscopic unit, disposed on a convex curved surface formed on the other side of the main unit, for dispersing the light incident on the main unit and reflecting the light to the one side of the main unit; and
a photodetector, disposed on the one side of the main unit, for detecting the light dispersed by the spectroscopic unit;
wherein the spectroscopic unit has a diffraction layer formed along the curved surface, a flange integrally formed with the diffraction layer along a periphery thereof so as to become thicker than the diffraction layer, and a reflection layer formed on the other side of the diffraction layer;
wherein at least a part of the curved surface in contact with the flange is a rough surface adapted to scatter light; and
wherein a surface of the flange opposing the curved surface is a flat surface.

2. A spectroscopic module according to claim 1, wherein a part of the curved surface opposing a diffraction grating pattern of the diffraction layer while in contact with the diffraction layer is a surface smoother than the part of the curved surface in contact with the flange.

3. A spectroscopic module according to claim 1, wherein a surface of the flange opposing the curved surface is a rough surface adapted to scatter light.
